# EUROPEAN PATENT APPLICATION

(11) **EP 4 379 143 A1**
(43) Date of publication of application: **05.06.2024**
(21) Application number: 23208931.8
(22) Date of filing: 09.11.2023
(51) Int. Cl.: E02B 3/10, B65D 90/24, B67D 7/32, E02D 29/02, E02D 31/00

(54) **A MODULAR BUND**

(30) Priority: 29.11.2022 GB 202217900; 09.01.2023 GB 202300252
(71) Applicant: Hunt, Barnaby, Belvedere Kent DA17 5HD (GB)
(72) Inventor: Hunt, Barnaby, Belvedere Kent DA17 5HD (GB)
(74) Representative: Fry, David John

(57) **Abstract**

A modular bund system comprising two or more wall components connectable together to form a perimeter around an area to be protected. Each component has a longitudinal slot or channel extending internally along its length to receive a sealing member. The sealing member is located within the slot to provide a fluid barrier along the base of each the component.

## Description

### Field of the Invention

The present invention relates to a modular bund system. More especially, the invention relates to a modular bund system having an internal gasket, which is adaptable to any size or shape dependant on the area to protected.

Moreover, the invention relates to a bund which components are made from recyclable materials.

### Background to the Invention

A bund, in simple terms, is a containment around an area where hazardous liquids are handled, processed or stored. Bunds are usually constructed of reinforced mass concrete.

A common bund system comprises fixing a timber bund to the structure to the floor or an area to protected and then waterproof the bund using a liquid membrane or a torch on felt that contains bitumen that leaves a mark on the permanent structure. On disposal of bitumen products or, materials that are coated with bitumen this becomes contaminated waste and has to be disposed of accordingly. The applicant has personally installed many kilometres of this particular type of bund on various construction sites and when this bund was no longer needed the timber would be disregarded not being able to be used again.

Furthermore, over a period of time, chemicals/oil leaching out of bunds can go unnoticed and lead to serious ground and groundwater contamination. If bunds develop cracks, they will need to be repaired to ensure the bund is not only watertight but retains the structural integrity to withstand a catastrophic failure.

The present invention seeks to provide environmentally friendly bund system that is made from recyclable materials and can be constructed to form any desired shape or size with individual components being replaceable in adapt the shape or for repair.

### Statements of the Invention

According to one aspect of the invention, there is provided a modular bund system comprising two or more wall components (2) connectable together to form a perimeter around an area to be protected, characterised in that each component has a longitudinal slot or channel (4) extending internally along its length and a sealing member (6) located within the slot to provide a fluid barrier along the base (10) of each the component.

Preferably, each wall component is made from recyclable plastic material.

Preferably, the sealing member is made from a closed cell foam material.

Preferably, each wall component includes means to secure the base of the component to a surface.

Preferably, the one or more wall components have the general shape of a trapezoidal prism.

Preferably, the bund system further comprises at least one connecting member (24) to connect wall components together.

Preferably, the connecting member includes a longitudinal slot or channel (4) to align with the channel of the wall components connected either side of the connecting member, so to receive the sealing member therethrough.

Preferably, the bund system comprises at least end wall component (32) having means to secure one side to a wall component and the other side to a vertically orientated surface.

Preferably, at least one wall component (30) is curved.

Preferably, the at least one curved wall component has a 90 degrees curve (30A).

Preferably, the at least one curved wall component has a 45 degrees curve (30B).

Preferably, the bund system comprises at least one pair of semi-circular wall components (50) connectable together to form a circle.

Preferably, the bund system further comprises at least one wedge shaped member (42, 44) securable to one or both sides of a wall component.

### Brief description of drawings

At least one embodiment of the invention will now be described with reference to the accompanying figures, in which:
Figure 1 is a perspective view of a main wall component of the bund system constructed in accordance with the invention;
Figure 2 is the bund component of figure 1, showing the internal gasket;
Figure 3 shows the bund component of figure 1, illustrating the securement means;
Figure 4 shows the bund component of figure 1, illustrating the clip covers;
Figure 5 illustrates the connection of two bund components of figure 1;
Figure 6 shows the cover member for use between two bund components,
Figure 7 illustrates the connection of corner components;
Figure 8 illustrates the connection of an end component;
Figure 9 illustrates a construction of a bund in accordance with the system;
Figure 10 illustrates a further constriction of the bund in accordance with the system;
Figures 11 and 12 illustrate a ramp mechanism for use with a bund constructed in accordance with the system;
Figure 13 illustrates a circular bund construction in accordance with the system;
Figure 14 shows a perspective view of a main wall component of the bund system constructed in accordance with another embodiment of the invention, illustrating a further cross-sectional view of the component;
Figure 15 illustrates the connection of two bund components of figure 14;
Figure 16 illustrates connection of a corner component;
Figure 17 illustrates another circular bund construction;
Figure 18 illustrates the securement means for the bund system;
Figures 19 and 20 illustrate a ramp mechanism for use with a bund system;
Figure 21 illustrates a construction of a bund system
Figure 22 illustrates a further construction of a bund in accordance with another embodiment of the invention;
Figure 23 illustrates a perspective view of the sealing member;
Figure 24 illustrates the connection of an end component to a vertical surface; and
Figure 25 shows a cover member for use between two bund components.

### Detailed description of the invention

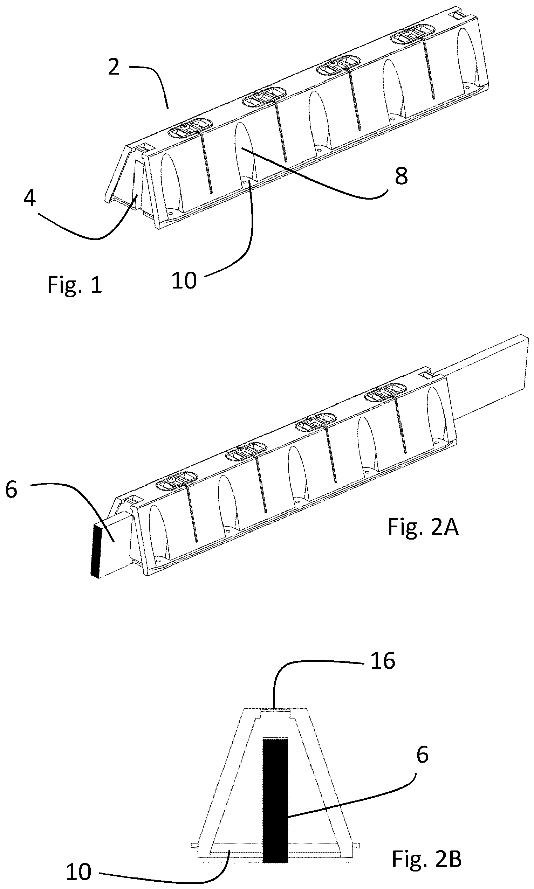

A main wall component of the bund system is shown in figure 1. The main wall component 2 is manufactured and moulded from a recycled plastic material. As well as the bund component being reusable, at the end of its life the wall component 2 can be recycled, so not contributing to landfill.

The wall component 2 has the general shape of a trapezoidal prism to allow multiple components 2 to be stacked and easily palatized for transportation and storage.

As can be seen in figure 2, the wall component 2 includes a generally rectangular longitudinal slot or channel 4 extending internally along its length to receive a sealing block 6 made, for example from a closed cell foam, which acts to form a seal along the base of the wall component 2.

The sealing block 6 can be used multiple times and its integrity is largely protected by being fixed internally within the wall component structure.

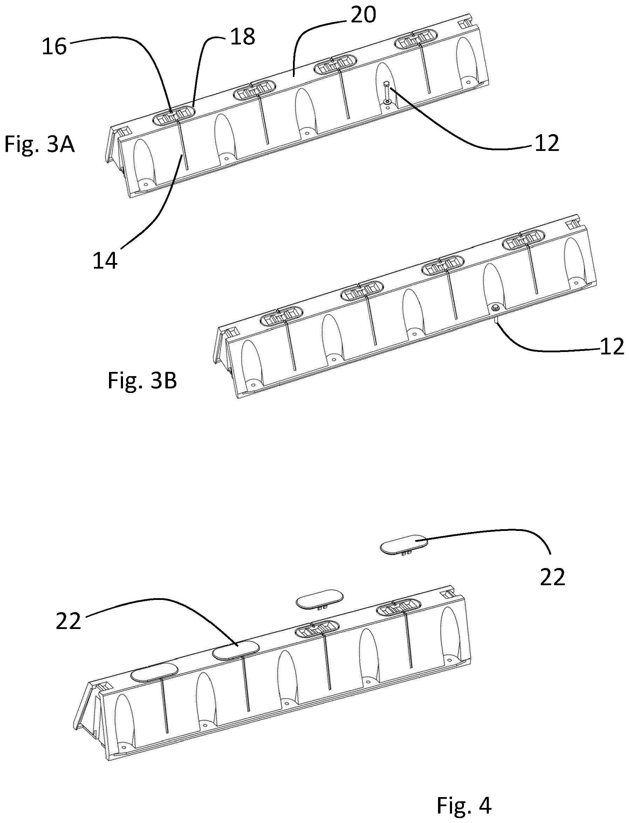

As can be seen in figure 3, the sealing block 6 extends downwardly slightly beyond the floor of the wall component 4 to provide a robust seal against the floor surface.

Both outer walls of the wall component 2 include a plurality of equi-spaced side recesses 8. The recesses 8 provide cavities in the side walls to allow the base 10 of the wall component 2, at the bottom of each recess 8, to be secured to a permanent floor structure, using conventional means such as a nut and bolt or screw 12 as be seen in figure 3.

The recesses 8 divide the wall component 2 into individual sections formed integral with each other in the lower part. The top part is separable by a cut line 14 extending through the top section down towards the base. The cut lines 14 allow for the longitudinal length of the wall component 2 to be shortened by separating the top part along the appropriate cut line 14 and breaking the lower section to separate the wall component sections at that point.

The cut lines 14 could be perforations in the surface of the wall component 2 to provide lines of weakness which can be broken to reduce the size of the component 2.

To retain integrity when the sections are not to be separated, a clip mechanism 16 is provided within a recess 18 formed in the flattened ceiling 20 of the wall component 2, extending into each section.

As can be seen in figure 4, a cap or cover 22 is provided to secure over each clip mechanism 16 in use to protect the recess 18 from water ingress and to fully secure the top parts of each section together and prevent them from separating and thereby applying pressure to the lower part of the wall component.

In a similar way, individual sections can be secured together to extend the overall length of the wall component 2.

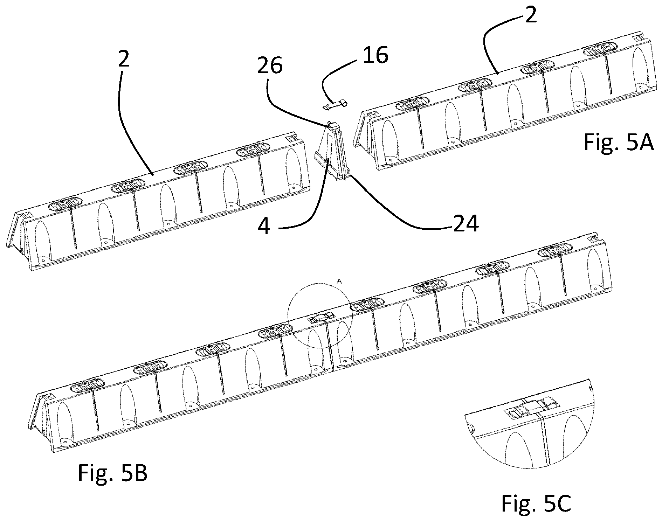

To this end, as can be seen in figure 5, a connecting member 24 is provided which has a complimentary shape to the wall component 2. The connecting member 24 is placed between the ends of each section and the clip 16 is placed through a channelled section 26 formed in the top of the connecting member 24 before clipping to the neighbouring wall component section.

The connecting member 24 has the same internal shape profile as the wall component 2 so to provide continuance of the channel 4 for the sealing block 6 to extend therethrough.

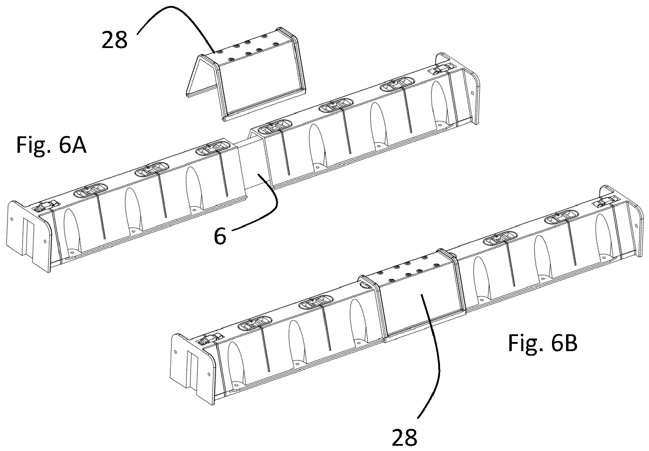

If the wall component 2 has be cut to an unconventional length the wall component 2 can be cut, using a conventional cutting tool, at any point between the pre-formed cut lines 14. In such a case, a cover member 28 is provided with the same outer profile as the wall component 2, to be placed and secured over the exposed sealing block 6, as can be seen in figure 6.

The modular bund system includes further wall components of the same structure but different shape to allow the perimeter barrier to be built of any shape and length.

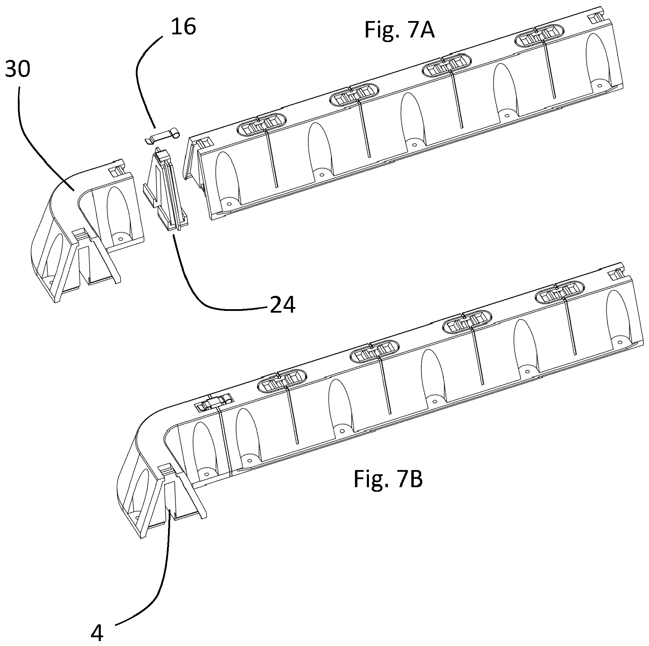

For example, as can be seen in figure 7, a corner wall component 30 is included to provide a corner or extended angle to the perimeter barrier. The corner wall component 30 has the same cross-sectional shape profile and structure as the main wall component 2 so to be connectable to it in the same wall using the connecting member 24 and clip arrangement 16 as previously described. Each corner component 30 also includes a channel 4 for the sealing block 6.

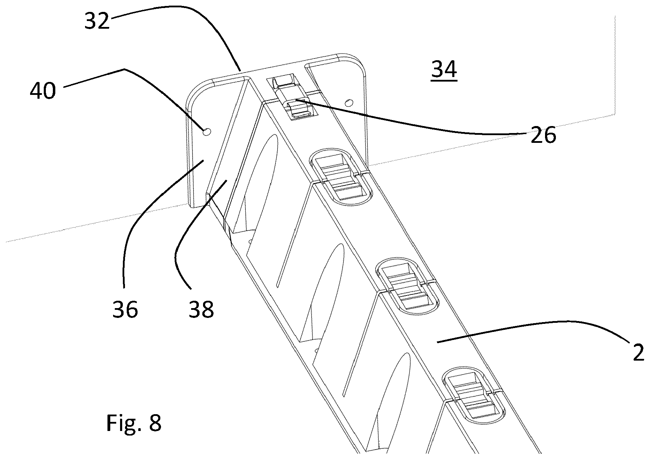

Similarly, as can be seen in figure 8, the system may also include an end wall component 32 to secure the bund to a vertical surface 34 at one or both ends, as shown in figure 8. The end wall component 32 includes a flat plate section 36 from which a wall section 38 extends. The wall section 38 has the same shape and structure profile as the main wall component 2 to allow it to be connected thereto in the same way using clips as previously described.

The plate section 36 has apertures 40 to receive fastening means to secure the plate section 36 to and against the vertical surface 34.

A bund system formed from connectable modular components provides flexibility in the construction of its overall shape and structure to allow the bund to be constructed to any desired shape or length depending on the area to be protected.

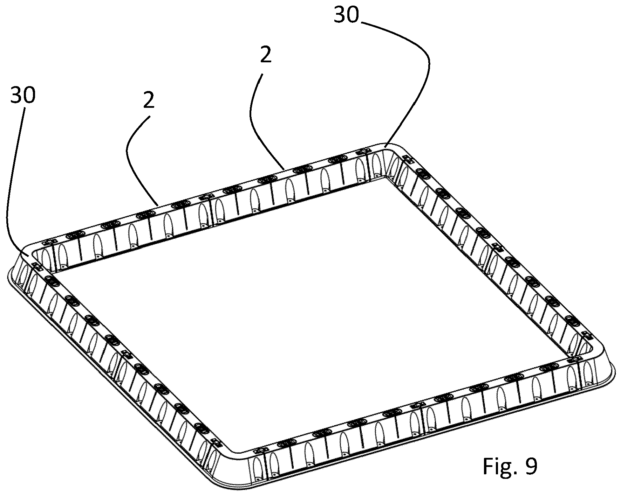

Figure 9 illustrates, for example, a bund system constructed as square or rectangular boundary with four corner sections 30 all having 90 degrees angles.

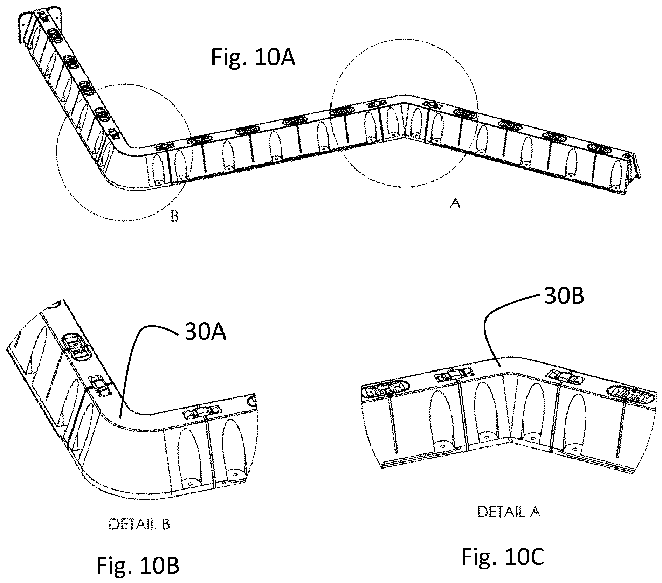

Figure 10 shows a bund being constructed in an unconventional shape, by securing two corner wall components 30A and 30B constructed with different angled curves. Corner section 30A has a 90 degrees angle, and corner wall component 30B has a 45 degrees angle, for example.

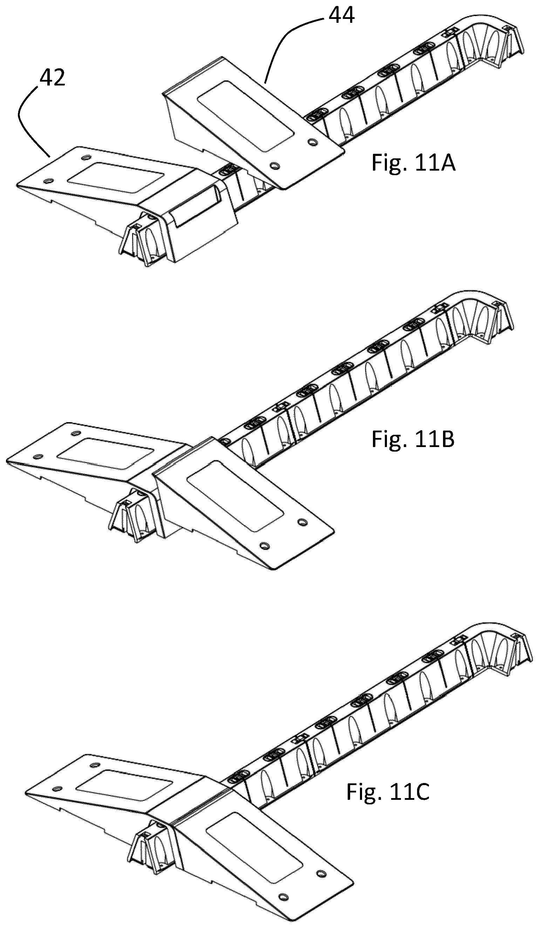

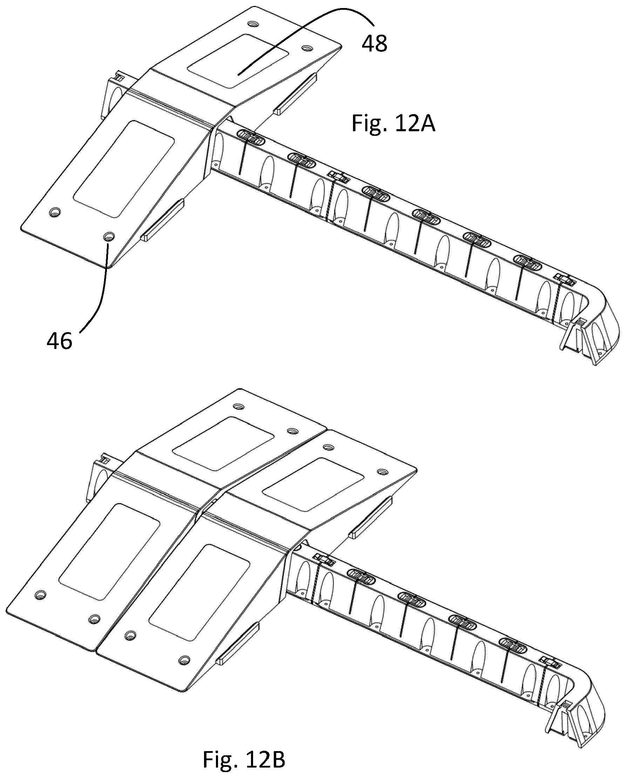

The bund may also provide ramp components that can be secured to and over the bund as shown in figure 11 and 12. The ramp comprise first and second wedge members 42, 44 that secure together either side of the bund wall. Each edge member 42, 44 is typically 1 m wide and 1.2m long. The first wedge component 42 includes a recess with an internal surface complimentary to the outer profile of the wall component 2 so that the wall component 2 can be received in the recess. The second wedge component 44 can then be secured to the first wedge component to extend outwardly from the other side of the bund wall.

Both wedge components 42, 44 have apertures 46 to allow their ends to be secured to the floor.

Both wedge components 42, 44 have a section 48 on their surface that is made from, or has a layer of non-slip material. Alternatively, the entire exposed surface of each component 42, 44 is made from such non-slip material.

As can be seen in figure 12B, two wedge components 42 may be connected together either side of the bund to increase the ramp area if required.

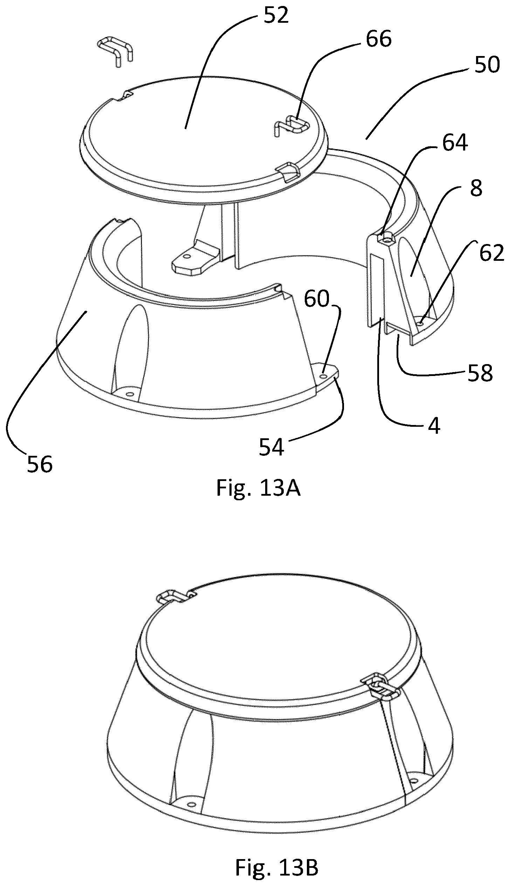

Figure 13 shows circular bund formed from securing two semi-circular or C-shaped wall components 50 together. The circular bund is used to surround pipes that extend up through the floor. The bund opening diameter is typically around 200mm. Each component includes the same channel 4 to receive a complimentary shaped sealing block 6 as previously described.

When placed together to form a circle, a circular cover member 52 is secured on top and clipped in place to secure the two wall components 50 together. The securing and clipping mechanism is different to that described in relation to the other wall components and has been simplified. Each semi-circular wall component has a base flange 54 that extends outwardly from the wall 56 at one end and which has an inwardly extending recess 58 at the other end. The two components 50 are secured placed together such that the outwardly extending base flange 54 of one component extends into the recess 58 of the other. A fastening aperture 60 is provided at or near the end of each base flange 54 to align with the aperture 62 in the base of the side recess 8 of the opposing component, to allow a fastener to extend through both apertures to secure the components 50 to the floor.

Apertures 64 are also provided in the flattened rim in the ceiling of each component. The cover member 52 has a complimentary recess to receive a two-pronged clip 66 that extends into the aperture 64 of each component to secure them together.

The modular bund system can be assembled and used to stop water ingress to a perimeter. It can be fixed to multiple surface types and can be fixed in a dry or wet state. The bund components can be clamped together to adapt to any size or shape dependant of the area to be protected.

When longer required the bund components can be simply unscrewed or unfastened and moved to another location and reset, or otherwise stored and re-used on future projects. By using recycled plastic to make the bund, tonnes of waste could be prevented from ending up in landfill.

Suitable fixing or fastening means can be chosen depending on the surface to which the bund components are to be fixed. The surface could be concrete, steel or timber for example and suitable fixings will be chosen accordingly. The fixings could include, for example, concrete screw anchors, stell self-tapping tec screws or wood coach bolts.

The bund components are provided in different lengths, for example, 2m, 1m and 0.5m and can also be cut to alternative sizes as detailed above.

The bund, when assembled, is designed to be waterproof and chemical proof. In the case of chemical storage (for example diesel barrels), a rubber mat is first placed on the ground and the bund components are fixed to the mat creating a volume of 150% of the COSHH product stored within it.

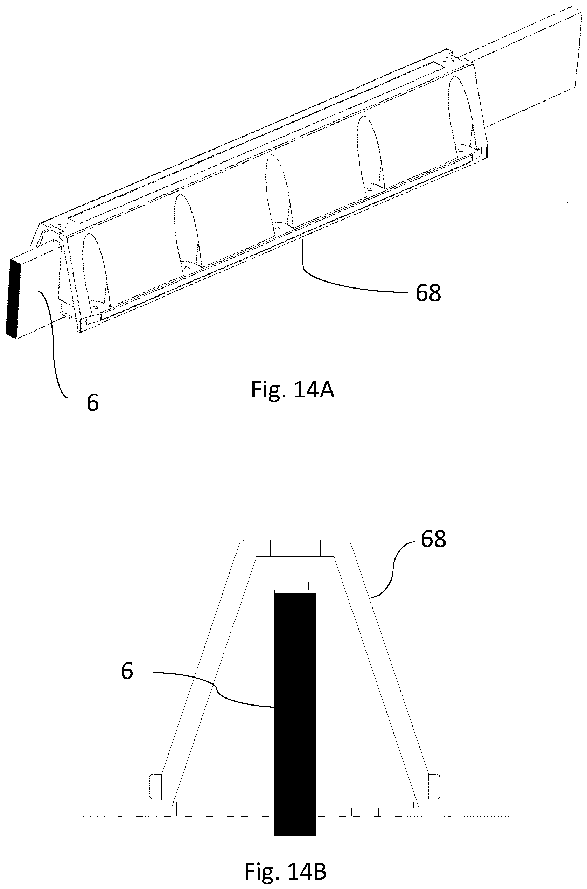

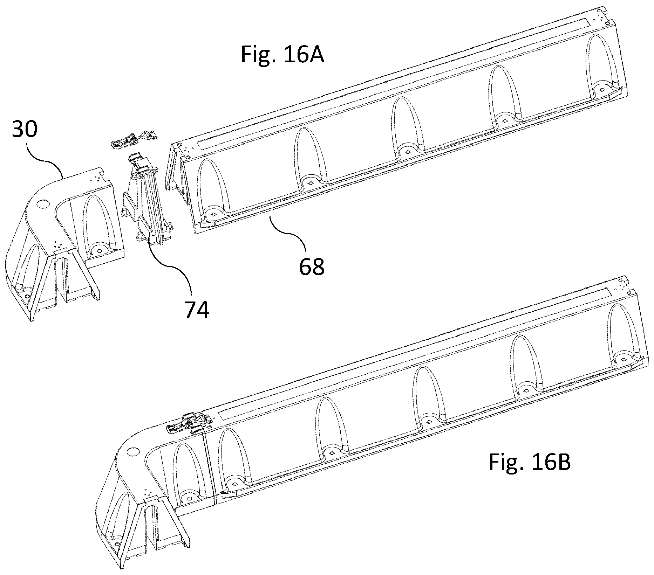

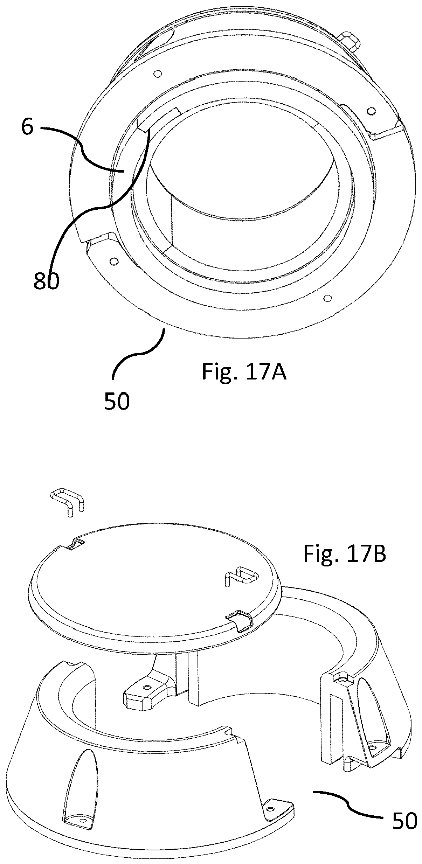

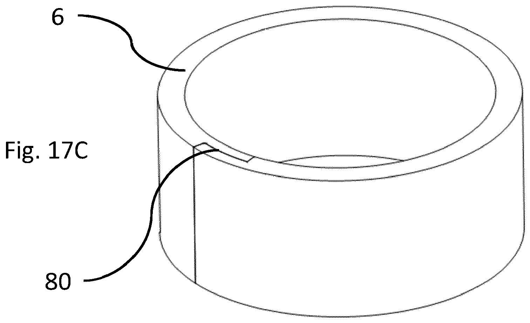

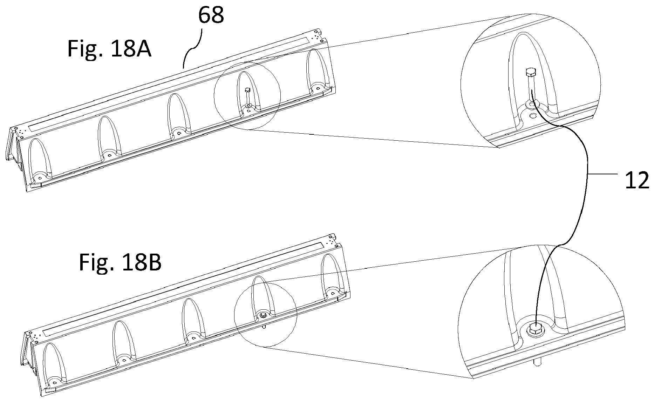

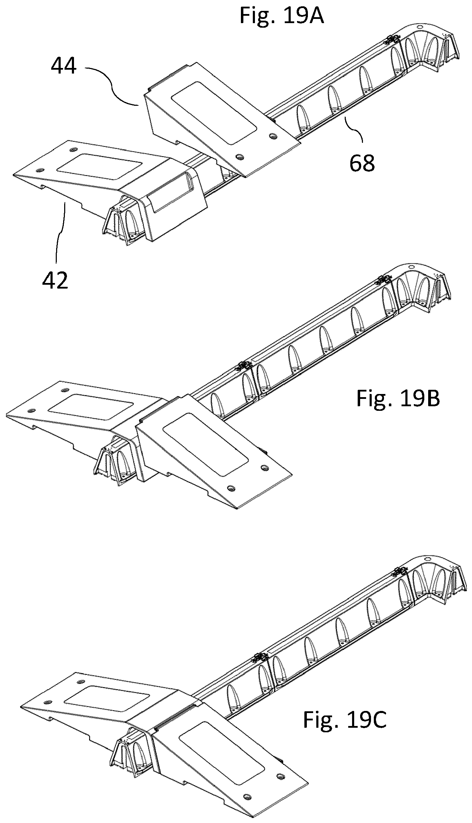

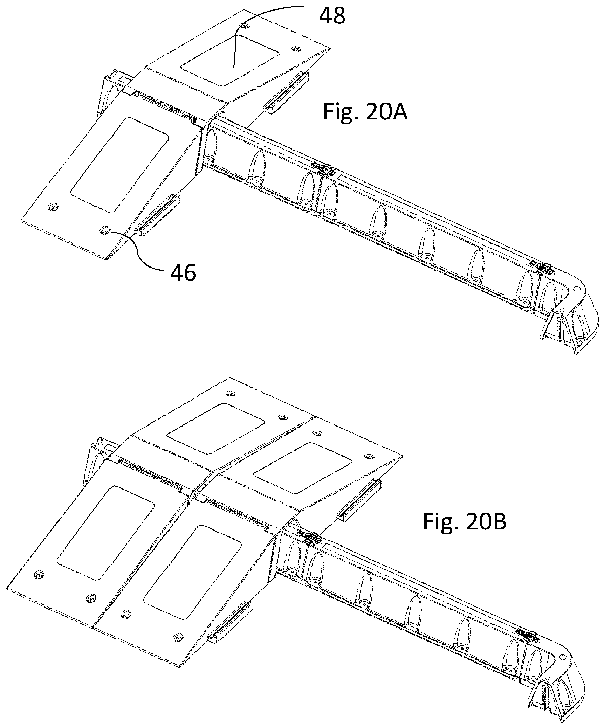

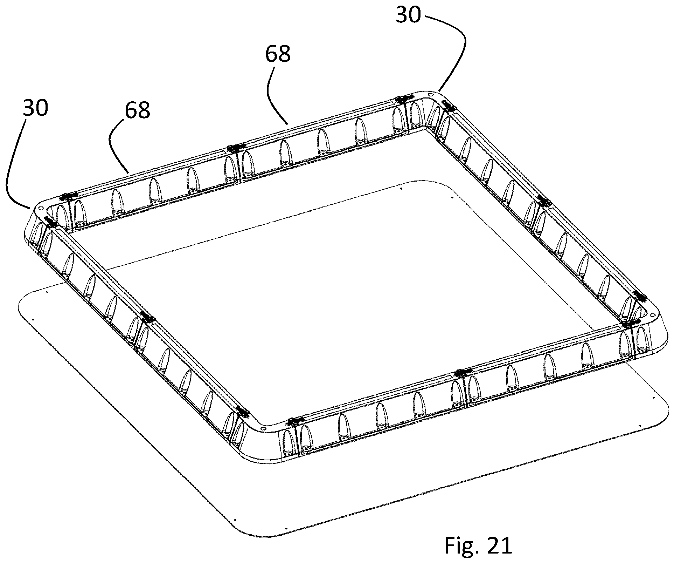

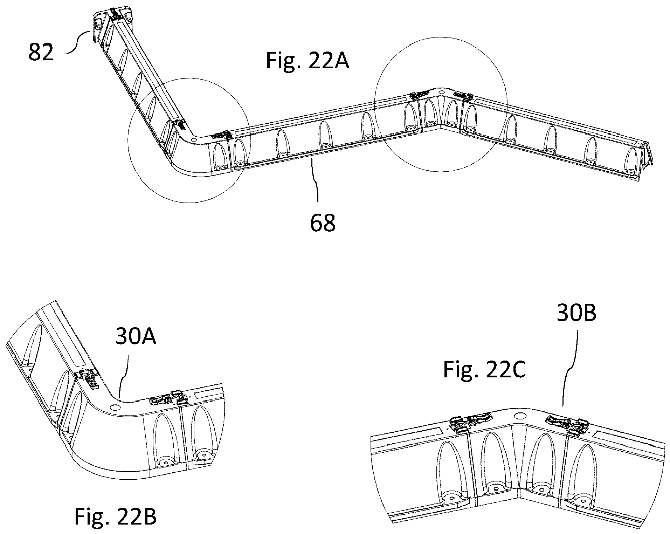

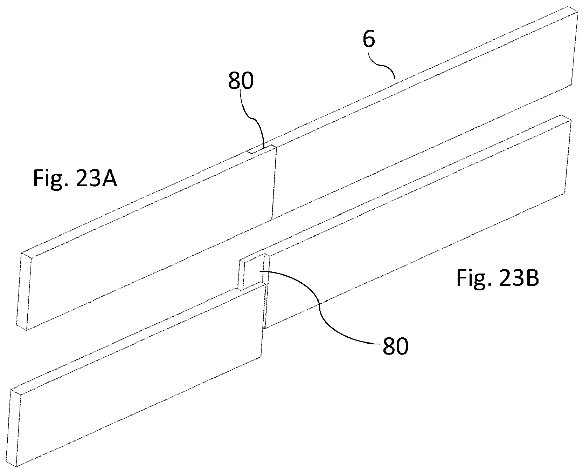

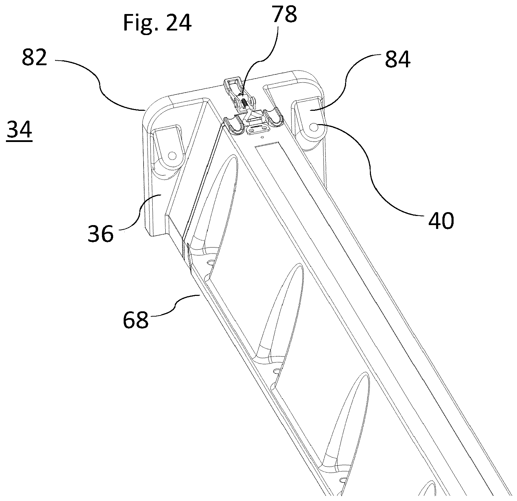

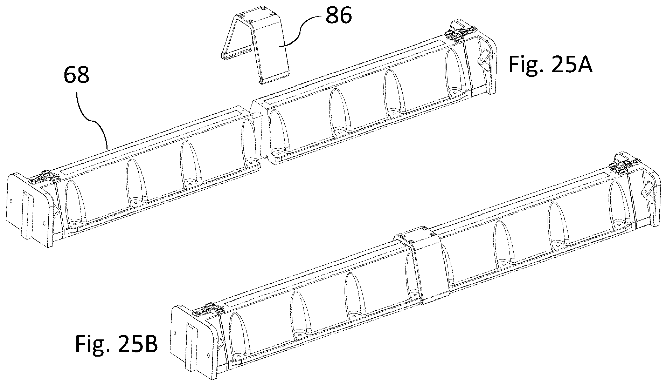

An alternative embodiment is illustrated in figures 14 to 25 which comprises of the same features as the previous embodiment except for the differences outlined herein. In this embodiment, the component 68 is comprised of a generally flat top surface. The ends of the component comprise at least one pair of apertures 70 and a plurality of throughbores 72.

Individual sections may be secured together to extend the overall length of the wall component 68.

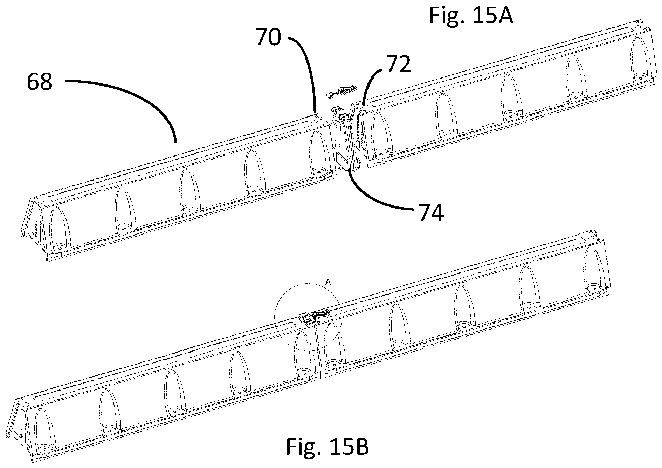

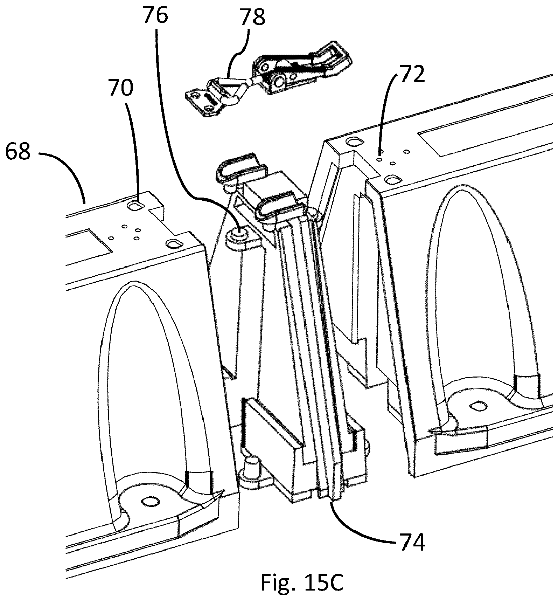

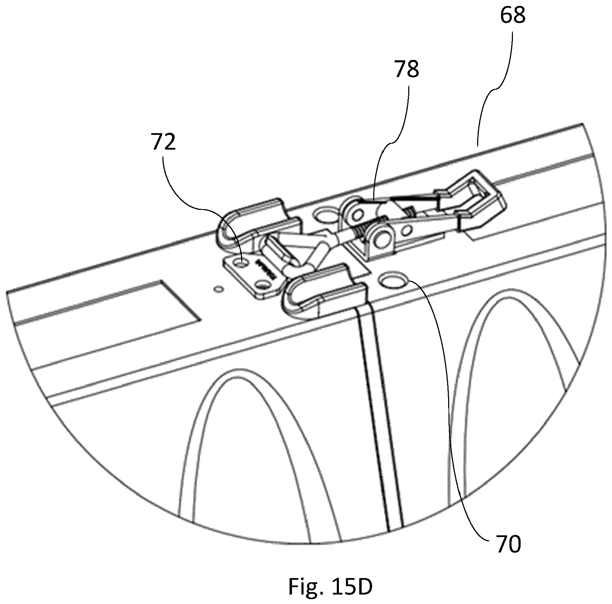

To this end, as can be seen in figure 15, a connecting member 74 is provided which has a complimentary shape to the wall component 68 and is placed between the ends of each section.

The connecting member 68 comprises at least one pair of cylindrical projections 76 which are complementarily received by apertures 70.

The ends of the components and the connecting member are further secured in place via toggle clamp 78, which is located on the top surface of the components therebetween. The toggle clamp 78 is secured to the components through screws located in throughbores 72.

In this embodiment, the sealing block 6 now comprises at least spliced connection 80 along its length.

The end wall component 82 now comprise at least one pair of angled protrusions 84, upon which apertures 40 are located to receive a fastening means to secure the plate section 36 to and against the vertical surface 34.

The sealing block 6 located at the end of the wall component 82 extends past the plate section 36, thus forming a seal upon compression.

In this embodiment, the length of cover component 86 is shorter than cover component 28.

## Claims

1. A modular bund system comprising two or more wall components (2) connectable together to form a perimeter around an area to be protected, **characterised in that** each component has a longitudinal slot or channel (4) extending internally along its length t and a sealing member (6) located within the slot to provide a fluid barrier along the base (10) of each the component.

2. A bund system according to claim 1, wherein each wall component is made from recyclable plastic material.

3. A bund system according to claim 2, wherein the sealing member is made from a closed cell foam material.

4. A bund system according to any one of claims 1 to 3, wherein each wall component includes means to secure the base of the component to a surface.

5. A bund system according to any one of claims 1 to 4, wherein the one or more wall components have the general shape of a trapezoidal prism.

6. A bund system according to any preceding claim, further comprising at least one connecting member (24) to connect wall components together.

7. A bund system according to claim 6, wherein the connecting member includes a longitudinal slot or channel (4) to align with the channel of the wall components connected either side of the connecting member so to receive a sealing member therethrough.

8. A bund system according to any preceding claim, further comprising at least end wall component (32) having means to secure one side to a wall component and the other side to a vertically orientated surface.

9. A bund system according to preceding claim, wherein at least one wall component (30) is curved.

10. A bund system according to claim 8, wherein the at least one curved wall component has a 90 degrees curve (30A).

11. A bund system according to claim 8 or 9 wherein at least one curved wall component has a 45 degrees curve (30B).

12. A bund system according to any preceding claim, comprising at least one pair of semi-circular wall components (50) connectable together to form a generally circular bund.

13. A bund system according to any preceding claim, further comprising at least one wedge shaped member (42, 44) securable to one or both sides of a wall component.
